# FASCICULE DE BREVET EUROPEEN

(11) **EP 4 010 564 B1**
(45) Date de publication et mention de la délivrance du brevet: **25.02.2026**
(21) Numéro de dépôt: 20760496.8
(22) Date de dépôt: 04.08.2020
(51) Int. Cl.: F01D 11/24, F01D 25/14

(54) **ENSEMBLE VISANT À MAINTENIR UN BOÎTIER COLLECTEUR D'UN DISPOSITIF DE REFROIDISSEMENT DE CARTER D'UNE TURBINE DE TURBOMACHINE**
ANORDNUNG ZUR HALTERUNG EINES VERTEILERS EINER KÜHLUNGSVORRICHTUNG EINES TURBINENGEHÄUSES EINER TURBOMASCHINE
ASSEMBLY AIMING TO HOLD A MANIFOLD OF A COOLING DEVICE OF A CASING OF A TURBINE OF A TURBOMACHINE

(30) Priorité: 09.08.2019 FR 1909095
(43) Date de publication de la demande: 15.06.2022
(73) Titulaire: SAFRAN AIRCRAFT ENGINES, 75015 Paris (FR)
(72) Inventeur: MORLIERE, Simon, Nicolas, 77550 MOISSY-CRAMAYEL (FR); BLANCHARD, Stéphane, Pierre, Guillaume, 77550 MOISSY-CRAMAYEL (FR); BEAUQUIN, Nicolas, Jean-Marc, Marcel, 77550 MOISSY-CRAMAYEL (FR); GENDRAUD, Alain, Dominique, 77550 MOISSY-CRAMAYEL (FR); RENON, Olivier, 77550 MOISSY-CRAMAYEL (FR)
(74) Mandataire: Ernest Gutmann - Yves Plasseraud S.A.S.
(86) Numéro de dépôt international: PCT/FR2020/051432
(87) Numéro de publication internationale: WO 2021/028634

(56) Documents cités:
- EP-A1- 1 205 637
- EP-A1- 2 960 441
- FR-A1- 3 021 700
- US-A- 5 399 066

## Description

### Domaine technique de l'invention

La présente invention concerne un ensemble pour une turbine de turbomachine, telle par exemple qu'une turbomachine à double flux.

### Etat de la technique antérieure

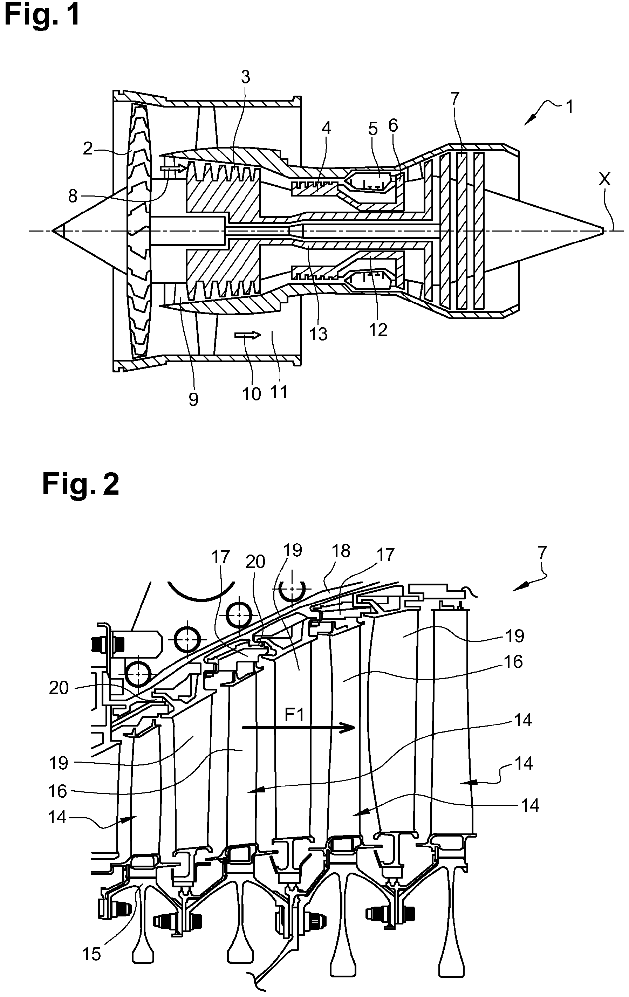

La figure 1 représente une turbomachine 1 à double flux et à double corps. L'axe de la turbomachine est référencé X et correspond à l'axe de rotation des parties tournantes. Dans ce qui suit, les termes axial et radial sont définis par rapport à l'axe X.

La turbomachine 1 comporte, de l'amont vers l'aval dans le sens d'écoulement des gaz, une soufflante 2, un compresseur basse pression 3, un compresseur haute pression 4, une chambre de combustion 5, une turbine haute pression 6 et une turbine basse pression 7.

L'air issu de la soufflante 2 est divisé en un flux primaire 8 s'écoulant dans une veine annulaire primaire 9, et un flux secondaire 10 s'écoulant dans une veine annulaire secondaire 11 entourant la veine annulaire primaire 10.

Le compresseur basse pression 3, le compresseur haute pression 4, la chambre de combustion 5, la turbine haute pression 6 et la turbine basse pression 7 sont ménagés dans la veine primaire 9.

Le rotor de la turbine haute pression 6 et le rotor du compresseur haute pression 4 sont couplés en rotation par l'intermédiaire d'un premier arbre 12 de manière à former un corps haute pression.

Le rotor de la turbine basse pression 7 et le rotor du compresseur basse pression 3 sont couplés en rotation par l'intermédiaire d'un second arbre 13 de manière à former un corps basse pression, la soufflante 2 pouvant être reliée directement au rotor du compresseur basse pression 3 ou bien par l'intermédiaire d'un train d'engrenage épicycloïdal par exemple. Comme cela est mieux visible à la figure 2, la turbine basse-pression 7 comporte en particulier différents étages successifs comportant des roues mobiles 14 et des parties fixes. Chaque roue mobile comporte un disque 15 au niveau duquel sont montées des aubes 16.

Les extrémités des aubes 16 sont entourées d'un anneau fixe 17 en matériau abradable, ledit anneau 17 étant fixé sur le carter 18 de la turbine. Des distributeurs 19 sont situés en aval des roues mobiles 14. Les distributeurs 19 et les anneaux 17 sont montés sur le carter par l'intermédiaire de brides ou de crochets 20 s'étendant depuis la surface radialement interne du carter 18.

Afin de garantir un rendement élevé de la turbomachine, il convient de limiter le flux d'air ne traversant pas les roues mobiles 14 des différents étages, c'est-à-dire de limiter les fuites entre les extrémités radialement externes des aubes 16 et l'anneau 17 en matériau abradable. Pour cela, il convient de contrôler le jeu au niveau de cette interface, ce jeu étant dépendant de la température du carter 18, et notamment des zones dudit carter 18 comportant les crochets ou brides 20 supportant l'anneau 17.

Le flux d'air primaire issu de la chambre de combustion 5 présente une température élevée et échauffe les parties situées en aval, telles que les parties fixes et mobiles de la turbine 6, 7.

Afin de maîtriser le jeu précité et d'éviter toute dégradation prématurée des différentes parties fixes et mobiles de la turbine, il est nécessaire de prévoir des moyens de refroidissement efficaces pouvant s'intégrer aisément dans l'environnement de la turbomachine.

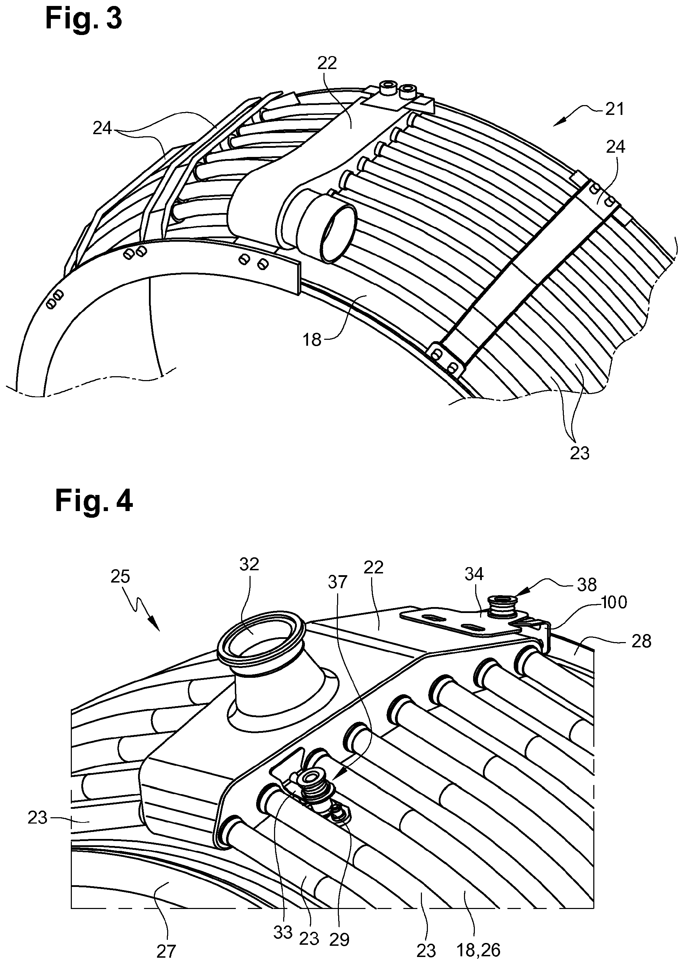

La demande de brevet FR 3 021 700, au nom de la Demanderesse, divulgue un dispositif de refroidissement 21 d'un carter 18 de turbine basse pression 7, visible à la figure 3, comportant des boîtiers collecteurs 22, chaque boîtier collecteur 22 s'étendant axialement. Le dispositif 21 comporte de plus des tubes 23 s'étendant circonférentiellement de part et d'autre des boîtiers collecteurs 22. Lesdits tubes 23, également appelés rampes, sont formés par des canalisations courbes de section circulaire, chaque tube 23 s'étendant circonférentiellement autour du carter par exemple selon un angle d'environ 90°.

Chaque tube 23 comporte une entrée d'air débouchant dans le boîtier collecteur 22 correspondant et une extrémité distale fermée. Chaque tube 23 comporte en outre une paroi cylindrique pourvue d'orifices d'éjection d'air tournés vers le carter 18, de sorte que de l'air de refroidissement puisse pénétrer dans les boîtiers collecteurs 22 puis dans les tubes 23 avant de déboucher par les orifices en regard du carter 18, de manière à le refroidir. On parle notamment de refroidissement par impact puisque l'air vient impacter le carter 18.

La partie radialement interne du boîtier comporte également des orifices d'éjection d'air tournés vers le carter et destinés à son refroidissement.

Chaque boîtier 22 est fixé, à son extrémité amont, à une bride amont du carter, par l'intermédiaire d'un organe de fixation amont, et à son extrémité aval, à une bride aval du carter, par l'intermédiaire d'un organe de fixation aval. Les organes de fixation peuvent être formés par des tôles vissées sur les brides correspondantes.

En fonctionnement, la température d'une partie du carter, en particulier de la partie amont, est plus importante que la température des brides sur lesquelles sont fixés les boîtiers. Les températures élevées provoquent des dilatations axiales et radiales. Du fait des différences de température entre les brides et les zones plus chaudes du carter, il existe des phénomènes de dilatation différentielles pouvant provoquer un contact entre les tubes et le carter. Afin d'éviter un tel contact, et donc une dégradation du dispositif de refroidissement, les tubes sont écartés radialement du carter, ce qui tend à réduire l'efficacité du refroidissement par impact et/ou nécessite des débits d'air de refroidissement important ce qui réduit le rendement de la turbomachine.

Par ailleurs, la fixation des boîtiers est assurée au travers de nombreuses pièces, ce qui génère une chaîne de cotes importante, augmentant les tolérances dimensionnelles nécessaires au montage du boîtier. De telles tolérances tendant à augmenter l'écartement radial ou entrefer entre les tubes et le carter.

L'invention a notamment pour but d'apporter une solution simple, efficace et économique à ces problèmes.

### Présentation de l'invention

A cet effet, elle propose un ensemble pour une turbine de turbomachine selon la revendication 1, comportant notamment un carter comprenant une paroi annulaire s'étendant autour d'un axe, et des moyens de refroidissement du carter, lesdits moyens de refroidissement comportant un boîtier collecteur et au moins un tube s'étendant circonférentiellement autour de la paroi annulaire du carter et relié au boîtier, l'au moins un tube comportant des orifices d'éjection d'air de refroidissement, caractérisé en ce que le carter comporte au moins deux bossages de fixation s'étendant radialement vers l'extérieur depuis la paroi annulaire du carter, lesdits bossages étant écartés circonférentiellement les uns des autres, le boîtier comportant au moins deux zones de fixation amont fixées respectivement auxdits bossages par l'intermédiaire de moyens de fixation amont et au moins une zone de fixation aval fixée au carter par l'intermédiaire de moyens de fixation aval, au moins certains des moyens de fixation autorisant un déplacement relatif dans la direction axiale et/ou dans la direction circonférentielle entre la zone de fixation du boîtier et le bossage ou entre la zone de fixation du boîtier et le carter. Une telle structure permet de réduire la chaine de cotes entre le boîtier et le carter, de façon à maîtriser le positionnement du boîtier et du ou des tubes par rapport au carter. Par ailleurs, les bossages sont placés au niveau de la paroi annulaire du carter et non au niveau des brides, de sorte que le boîtier est fixé dans des zones plus chaudes du carter. Le boîtier, et donc le ou les tubes qui sont reliés au boîtier, sont ainsi déplacés en même temps que la paroi annulaire en fonctionnement, lorsque cette paroi se dilate, en particulier dans la direction radiale. On évite ainsi les risques de contact entre le ou les tubes et la paroi annulaire du carter.

Ceci permet de mieux contrôler le refroidissement du carter et d'éviter les dégradations prématurées.

Par ailleurs, un tel ensemble peut être démonté aisément afin d'assurer sa maintenance. En particulier, un tel ensemble peut être démonté du carter sans nécessiter le démontage du carter par rapport au reste de la turbomachine.

Par ailleurs, les termes amont et aval sont définis par rapport au sens de circulation du flux de gaz au sein de la turbomachine ou de la turbine.

Les termes axial, radial et circonférentiel sont définis par rapport à l'axe du carter, qui est confondu avec l'axe de la turbine ou de la turbomachine.

Chaque bossage peut être formé par au moins une pièce distincte de la paroi annulaire du carter et est fixé à ladite paroi annulaire.

La fixation de ladite pièce distincte formant le bossage sur la paroi annulaire du carter peut être réalisé par vissage ou rivetage.

Le bossage peut comporter une partie en saillie s'étendant radialement vers l'extérieur depuis une platine de fixation, ladite platine étant fixée à la paroi annulaire du carter.

Ladite partie en saillie peut être cylindrique.

La zone de fixation peut venir en appui sur l'extrémité radialement externe du bossage correspondant.

Chaque zone de fixation peut être réalisé de façon monobloc avec le reste du boîtier ou peut être formé par un élément distinct, fixé au reste du boîtier, par exemple par soudage.

Le boîtier peut comporter une première zone de fixation et une seconde zone de fixation situées circonférentiellement de part et d'autre du boîtier.

La première zone de fixation et la seconde zone de fixation peuvent être situées sur un même plan radial.

La première zone de fixation et la seconde zone de fixation peuvent s'étendre axialement entre des tubes reliés au boîtier.

Chaque moyen de fixation amont comporte un insert monté dans un logement d'un bossage correspondant, lesdits moyens de fixation amont comportant et un organe de liaison qui relie d'une part à la une zone de fixation et à d'autre part à l'insert. L'insert peut ainsi être remplacé aisément en cas d'usure ou en cas de perte de moyens d'autofreinage de l'insert.

L'extrémité radialement interne du logement peut ne pas déboucher dans le volume interne du carter afin d'éviter que l'insert ne tombe dans le carter par gravité lors du montage par exemple. Une telle caractéristique permet également d'assurer l'étanchéité avec l'intérieur du carter.

L'insert peut comporter un filetage externe engagé dans un taraudage interne formé dans le logement du bossage, l'insert étant immobilisé en rotation par rapport au bossage.

De cette manière, l'insert peut être monté ou remplacé aisément.

L'insert peut être serti dans le logement du bossage.

Un tel sertissage peut être obtenu par déformation d'une partie radialement externe de l'insert.

En variante, l'insert peut être immobilisé en rotation dans le logement du bossage par l'intermédiaire d'une clavette.

L'organe de liaison peut être une vis, coopérant avec un taraudage interne de l'insert.

L'organe de liaison et/ou l'insert peuvent comporter des moyens d'autofreinage.

Les moyens d'autofreinage sont par exemple réalisés par une déformation des filets du taraudage interne de l'insert et/ou des filets de la vis, de façon à exercer un couple résistant de freinage après vissage de la vis dans le taraudage de l'insert.

Au moins certains desdits moyens de fixation peuvent comporter au moins un organe élastique pour relier une zone de fixation du boîtier à un bossage ou au carter,
Chaque moyen de fixation amont peut comporter un organe d'appui solidaire du bossage et comportant un rebord d'appui situé radialement à l'extérieur d'une zone de fixation du boîtier, l'organe élastique étant un organe de compression monté radialement entre l'organe d'appui et la zone de fixation du boîtier.

L'organe élastique est par exemple un ressort de compression hélicoïdal.

L'organe d'appui est par exemple une douille comportant une partie cylindrique montée autour de l'organe de liaison, et un rebord annulaire d'appui s'étendant perpendiculairement à la partie cylindrique. L'organe d'appui peut comporter un épaulement venant en appui radial sur une tête élargie de l'organe de liaison, directement ou indirectement, par exemple par l'intermédiaire d'une rondelle.

De façon générale, les différents appuis peuvent être réalisés de façon directe ou de façon indirecte, c'est-à-dire par l'intermédiaire d'un élément supplémentaire.

Une rondelle peut être montée entre l'organe élastique et la zone de fixation.

Les moyens de fixation amont peuvent comporter au moins une entretoise d'usure montée radialement entre une zone de fixation du boîtier et un bossage correspondant.

La présence d'une telle entretoise permet d'éviter ou de limiter l'endommagement du bossage correspondant. Une telle entretoise peut être changée aisément en cas de besoin. Au moins une zone de fixation amont peut comporter un trou oblong s'étendant circonférentiellement servant au passage d'un organe de liaison qui relie la zone de fixation amont correspondante à un bossage.

Chaque zone de fixation amont peut comporter un trou oblong s'étendant circonférentiellement servant au passage d'un organe de liaison relié d'une part à la zone de fixation amont correspondante et d'autre part au bossage correspondant.

La présence d'un trou oblong permet d'autoriser le déplacement dans la direction circonférentielle de la zone de fixation par rapport au bossage correspondant et compenser ainsi d'éventuels phénomènes de dilatation différentielle entre le boîtier et la paroi annulaire du carter, plus chaude que le boîtier en fonctionnement. Bien entendu, d'autres formes de réalisation sont possibles. Par exemple, l'une au moins des zones de fixation amont peut présenter un diamètre ou une dimension circonférentielle plus importante que le diamètre ou la dimension circonférentielle de l'organe de liaison correspondant.

La zone de fixation aval peut comporter un trou oblong s'étendant axialement servant au passage d'un organe de liaison qui relie la zone de fixation aval au carter.

La présence d'un trou oblong permet d'autoriser le déplacement dans la direction axiale de la zone de fixation par rapport au carter et compenser ainsi d'éventuels phénomènes de dilatation différentielle entre le boîtier et la paroi annulaire du carter, plus chaude que le boîtier en fonctionnement. Bien entendu, d'autres formes de réalisation sont possibles. Par exemple, la zone de fixation aval peut présenter un diamètre ou une dimension axiale plus importante que le diamètre ou la dimension axiale de l'organe de liaison correspondant.

La zone de fixation aval du boîtier peut être reliée à un bossage aval ou à une partie fixe par rapport au carter, par exemple un organe ou une tôle de fixation fixée à une bride aval du carter.

L'organe de liaison des moyens de fixation aval peut être une vis, coopérant avec un écrou. L'écrou peut être autofreiné.

Une rondelle peut être montée radialement entre l'écrou et la zone de fixation du boîtier. Les moyens de fixation aval comportent un organe d'appui solidaire du carter et comportant un rebord d'appui situé radialement à l'extérieur de la zone de fixation correspondante du boîtier, un organe élastique formé par un organe de compression étant monté radialement entre l'organe d'appui et la zone de fixation du boîtier.

L'invention concerne également une turbine ou une turbomachine équipée d'un tel ensemble.

L'invention concerne également un aéronef comportant une turbomachine du type précité.

### Brève description des figures

[Fig. 1] est une vue en coupe axiale d'un turboréacteur à double flux de l'art antérieur,
[Fig. 2] est une vue en coupe axiale d'une partie du turboréacteur de l'art antérieur, illustrant notamment la turbine basse pression,
[Fig. 3] est une vue en perspective d'une partie des moyens de refroidissement du carter et du carter de l'art antérieur,
[Fig. 4] est une vue en perspective d'une partie d'un ensemble comportant un carter et des moyens de refroidissement du carter, conformément à une forme de réalisation de l'invention,
[Fig. 5] est une vue éclatée et en perspective d'une partie d'un ensemble selon l'invention, les tubes n'étant pas représentés,
[Fig. 6] est une vue en coupe des moyens de fixation aval, dans une première position de la zone de fixation par rapport au carter,
[Fig. 7] est une vue en coupe des moyens de fixation aval, dans une seconde position de la zone de fixation par rapport au carter,
[Fig. 8] est une vue en perspective d'une partie d'un ensemble selon l'invention, les moyens de fixation n'étant pas visibles sur cette figure,
[Fig. 9] est une vue en perspective d'un bossage dans lequel est monté un insert.

### Description détaillée de l'invention

Les figures 4 à 9 illustrent un ensemble 25 pour une turbine 7 de turbomachine, selon une première forme de réalisation de l'invention. Cet ensemble 25 comporte un carter 18 de turbine comportant une paroi annulaire 26 s'étendant autour d'un axe X. Le carter 18 comporte en outre des brides annulaires 27, 28 s'étendant radialement vers l'extérieur depuis les extrémités axiales amont et aval de la paroi annulaire 18. Des bossages 29 s'étendent radialement vers l'extérieur depuis la paroi annulaire du carter 18. Les bossages 29 sont réalisés par l'intermédiaire de pièces distinctes de la paroi annulaire 26.

Les bossages 29 sont ici agencés par paire, les deux bossage 29 d'une même paire étant situés sur un même plan radial et sont situés dans une zone amont du carter 18. En particulier, les bossages 29 sont décalés axialement vers l'aval par rapport à la bride amont, de manière à être situés dans une zone présentant des températures élevées en fonctionnement. Les bossages 29 sont par exemple situés en regard du deuxième étage de la turbine 7.

Chaque bossage 29 comporte une partie en saillie 29a, par exemple cylindrique, s'étendant radialement vers l'extérieur depuis une platine de fixation 29b dans laquelle sont formés des trous 29c. La platine 29b est fixé à la paroi annulaire 26 par vissage, par l'intermédiaire de vis 29d et d'écrous 29e. Les vis 29d comportent des têtes élargies 29f venant en appui sur la surface radialement interne du carter, les écrous 29e venant en appui sur la surface radialement externe de la platine 29b. Les écrous 29e peuvent être autofreinés.

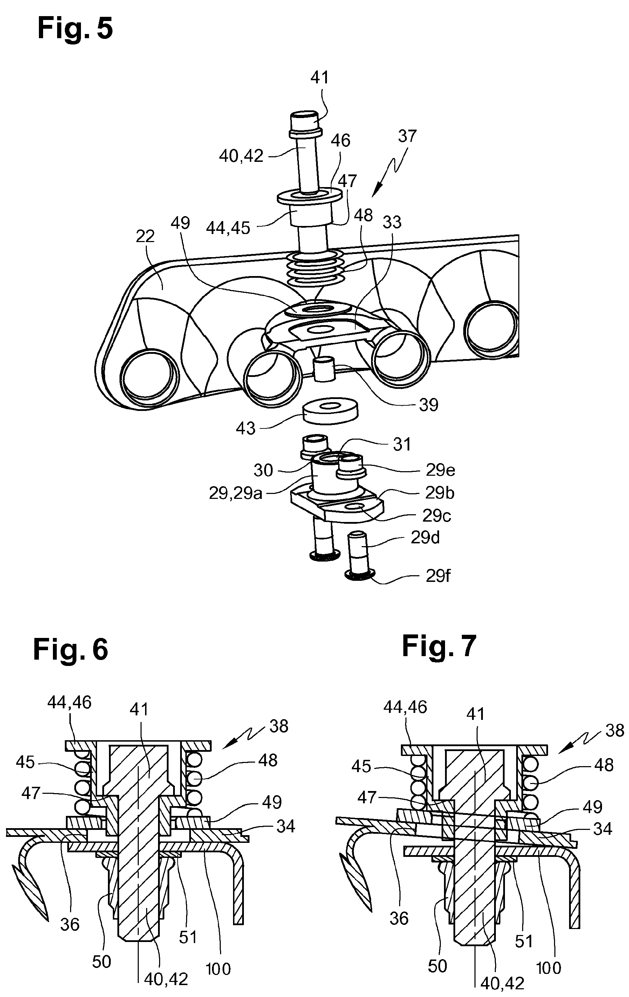

L'extrémité radialement externe 30 (figure 5) de chaque partie en saillie 29a forme une surface place. Un logement cylindrique 31 est formé dans chaque bossage 29, ledit logement 31 débouchant au niveau de l'extrémité radialement externe 30 du logement 31. Le logement 31 comporte un taraudage interne.

L'ensemble 25 comporte en outre des moyens de refroidissement du carter 18 comportant des boîtiers collecteurs 22, par exemple au nombre de deux, s'étendant axialement et comportant chacun une entrée d'air 32 radialement externe. Chaque boîtier 22 est creux et s'étend axialement, l'entrée d'air 32 débouchant dans ledit boîtier 22.

Chaque boîtier 22 comporte deux zones de liaison amont 33, situées circonférentiellement du part et d'autre du boîtier 22, et une zone de liaison aval 34.

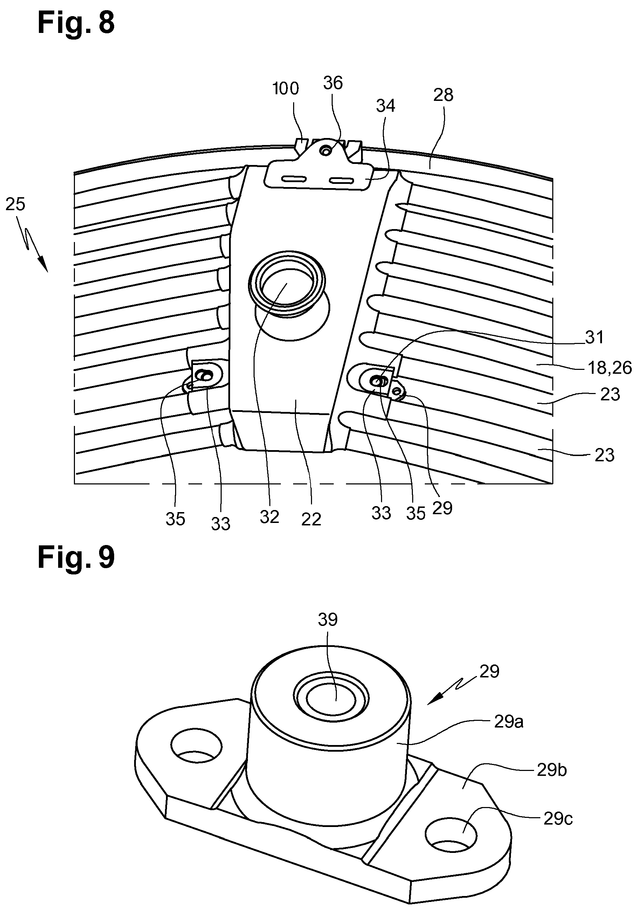

Chaque zone de liaison 33, 34 peut être formé par un élément distinct du reste du boîtier 22 et fixé à celui-ci, comme illustré à la figure 4. En variante, chaque zone de liaison 33, 34 peut être réalisée de façon monobloc avec le reste du boîtier 22, comme illustré aux figures 5 et 8 dans le cas des zones de liaison amont 33.

Chaque zone de liaison amont 33 comporte une partie s'étendant circonférentiellement, dans laquelle est formé un trou oblong 35 s'étendant dans la direction circonférentielle (figure 8). La zone de liaison aval 34 comporte une partie s'étendant axialement, dans laquelle est formé un trou oblong 36 s'étendant dans la direction axiale.

Les moyens de refroidissement comportent de plus des tubes 23, également appelés rampes, formés par des canalisations courbes de section circulaire, chaque tube 23 s'étendant selon un angle d'environ 90°.

Chaque tube 23 comporte une entrée d'air débouchant dans le boîtier 22 correspondant et une extrémité opposée fermée. Chaque tube 23 comporte en outre une paroi cylindrique pourvue d'orifices d'éjection d'air tournés vers le carter 18, c'est-à-dire radialement vers l'intérieur, de sorte que l'air de refroidissement pénétrant dans le boîtier 22 par l'entrée, circule au travers des tubes 23 avant de déboucher par les orifices en regard du carter 18, de manière à le refroidir par impact.

Les deux boîtiers 22 peuvent être diamétralement opposés, chaque boîtier 22 étant associé à plusieurs paires de tubes 23, à savoir des tubes 23 s'étendant circonférentiellement d'un côté et des tubes 23 s'étendant circonférentiellement du côté opposé. Ainsi, chaque boîtier 22 et les tubes 23 opposés associés peuvent par exemple couvrir une plage angulaire d'environ 180°. Bien entendu, le nombre de boîtiers peut varier en fonction des applications. Dans la forme de réalisation représentée aux figures, chaque boîtier 22 est associé à plusieurs paires de tubes 23, par exemple huit paires de tubes 23. Les tubes 23 d'une même paire sont situés sur un même plan radial, les tubes 23 de paires différentes étant décalées les unes des autres selon l'axe X de la turbomachine.

Les deux boîtiers 22 et les paires de tubes 23 associés présentent des structures sensiblement identiques et sont agencés de façon diamétralement opposée.

De cette manière, les tubes 23 sont situés sur plusieurs plans radiaux décalés axialement l'un de l'autre, les tubes 23 d'un même plan radial formant un anneau de refroidissement entourant le carter 18 sur sensiblement toute la périphérie du carter 18, c'est-à-dire sensiblement à 360°.

Les orifices sont répartis de telle manière que l'on observe un échange convectif d'air quasiment constant sur toute la longueur du tube 23, de façon à assurer un refroidissement homogène du carter 18.

Chaque zone de liaison amont 33 est relié au bossage 29 correspondant par l'intermédiaire de moyens de fixation amont 37.

Chaque zone de liaison aval 34 est relié, par l'intermédiaire de moyens de fixation aval 38, à un organe de fixation intermédiaire 100 en forme générale de L.

Les moyens de fixation amont 37 comportent, pour chaque zone de liaison amont 33 :
- un insert 39 (figure 5) comportant un filetage externe et un taraudage interne. L'insert 39 est vissé dans le logement 31 taraudé du bossage 29 correspondant et serti sur ledit bossage 29. Le filetage interne de l'insert 39 est du type autofreiné.
- une vis 40 comportant une tête élargie 41, radialement externe, et une partie filetée 42, radialement interne, vissée dans l'insert 39,
- une entretoise d'usure 43 montée radialement entre la surface radialement interne de la zone de fixation 33, et l'extrémité plane 30 du bossage 29,
- un organe d'appui se présentant sous la forme d'une douille 44 comportant une partie cylindrique 45 montée autour de la vis 40, et un rebord annulaire d'appui 46 s'étendant perpendiculairement à la partie cylindrique 45 depuis l'extrémité radialement externe de la partie cylindrique 45. La partie cylindrique 45 comporte deux zones de diamètres différents délimitant un épaulement 47 servant à l'appui radial sur la tête élargie 41 de la vis 40.
- un organe élastique 48 formé par un ressort de compression hélicoïdal 48 entourant la partie cylindrique de l'organe d'appui 44. L'extrémité radialement externe du ressort de compression 48 prend appui radialement sur le rebord 46 de l'organe d'appui 44. L'extrémité radialement interne du ressort de compression 48 prend appui radialement sur la surface supérieure de la zone de fixation 33, par exemple par l'intermédiaire d'une rondelle 49. L'effort radial exercé par l'organe élastique 48 tend ainsi à plaquer radialement (indirectement) la zone de fixation 33 contre l'extrémité radialement externe 30 du bossage 29 correspondant.

Les moyens de fixation aval 38 comportent :
- une vis 40 comportant une tête élargie 41, radialement externe, et une partie filetée 42, radialement interne,
- un écrou autofreiné 50 coopérant avec la partie filetée 42 de la vis 40, l'écrou 50 prenant appui sur la surface radialement interne de l'organe de fixation intermédiaire 100, par l'intermédiaire d'une rondelle 51. L'organe de fixation intermédiaire 100 est fixé à la bride aval 28.
- un organe d'appui 44 se présentant sous la forme d'une douille comportant une partie cylindrique 45 montée autour de la vis 40, et un rebord annulaire d'appui 46 s'étendant perpendiculairement à la partie cylindrique 45 depuis l'extrémité radialement externe de la partie cylindrique 45. La partie cylindrique 45 comporte deux zones de diamètres différents formant un épaulement 47 servant à l'appui radial de la tête élargie 41 de la vis 40.
- un organe élastique 48 formé par un ressort de compression hélicoïdal 48 entourant la partie cylindrique 45 de l'organe d'appui 44. L'extrémité radialement externe du ressort de compression 48 prend appui radialement sur le rebord 46 de l'organe d'appui 44. L'extrémité radialement interne du ressort de compression 48 prend appui radialement sur la surface supérieure de la zone de fixation aval 34, par exemple par l'intermédiaire d'une rondelle 49. L'effort radial exercé par l'organe élastique 48 tend ainsi à plaquer radialement la zone de fixation aval 34 contre la surface radialement externe de l'organe de fixation intermédiaire 100.

Une telle structure permet de réduire la chaine de cotes entre le boîtier 22 et le carter 18, de façon à maîtriser le positionnement du boîtier 22 et des tubes 23 par rapport au carter 18. Par ailleurs, les bossages 29 sont placés au niveau de la paroi annulaire 26 du carter 18 et non au niveau des brides 27, 28, de sorte que le boîtier 22 est fixé dans des zones plus chaudes du carter 18. Le boîtier 22, et donc le ou les tubes 23 qui sont reliés au boîtier 22, sont alors déplacés en même temps que la paroi annulaire 26 en fonctionnement, lorsque cette paroi 26 se dilate, en particulier dans la direction radiale. On évite ainsi les risques de contact entre le ou les tubes 23 et la paroi annulaire 26 du carter 18.

Ceci permet de mieux contrôler le refroidissement du carter 18 et d'éviter les dégradations prématurées.

La présence des trous oblongs 35, 36 permet d'autoriser le déplacement dans la direction circonférentielle et dans la direction axiale de la zone de fixation 33, 34 concernée par rapport au carter 18 et compenser ainsi d'éventuels phénomènes de dilatation différentielle entre le boîtier 22 et le carter 18, plus chaud que le boîtier 22 en fonctionnement.

Par ailleurs, les moyens de fixation amont 37 et aval 38 autorisent un décalage angulaire entre les zones de fixation 33, 34, d'une part, et les bossage 29 ou l'élément de fixation intermédiaire 100, d'autre part, comme illustré à la figure 7.

Bien entendu, d'autres formes de réalisation sont possibles.

## Revendications

1. Ensemble (25) pour une turbine (7) de turbomachine comportant un carter (18) comprenant une paroi annulaire (26) s'étendant autour d'un axe (X), et des moyens de refroidissement du carter (18), lesdits moyens de refroidissement comportant un boîtier collecteur (22) et au moins un tube (23) s'étendant circonférentiellement autour de la paroi annulaire (26) du carter (18) et relié au boîtier (22), l'au moins un tube (23) comportant des orifices d'éjection d'air de refroidissement, **caractérisé en ce que** le carter (18) comporte au moins deux bossages de fixation (29) s'étendant radialement vers l'extérieur depuis la paroi annulaire (26) du carter (18), lesdits bossages (29) étant écartés circonférentiellement les uns des autres, le boîtier (22) comportant au moins deux zones de fixation amont (33) qui sont chacune fixée à un bossage (29) par l'intermédiaire de moyens de fixation amont (37) et au moins une zone de fixation aval (34) fixée au carter (18) par l'intermédiaire de moyens de fixation aval (38), au moins certains des moyens de fixation (37, 38) autorisant un déplacement relatif dans la direction axiale et/ou dans la direction circonférentielle entre la zone de fixation (33, 34) du boîtier (22) et le bossage (29) ou entre la zone de fixation (33, 34) du boîtier (22) et le carter (18) et **en ce que** chaque moyen de fixation amont (37) fixé à une zone de fixation amont (33) comporte un insert (39) monté dans un logement (31) d'un bossage (29), les moyens de fixation amont (37) comportant un organe de liaison (40) reliant la zone de fixation amont (33) à l'insert (39).

2. Ensemble (25) selon la revendication 1, **caractérisé en ce que** chaque bossage (29) est formé par au moins une pièce distincte de la paroi annulaire (26) du carter (18) et est fixé à ladite paroi annulaire (26).

3. Ensemble (25) selon la revendication 1 ou 2, **caractérisé en ce que** l'insert (39) comporte un filetage externe engagé dans un taraudage interne formé dans le logement (31) du bossage (29), l'insert (39) étant immobilisé en rotation par rapport au bossage (29).

4. Ensemble (25) selon la revendication l'une des revendications 1 à 3, **caractérisé en ce que** l'organe de liaison (40) relie une zone de fixation (33, 34) à un bossage (29), l'organe de liaison (40) étant une vis, coopérant avec un taraudage interne de l'insert (39).

5. Ensemble (25) selon la revendication 4, **caractérisé en ce que** l'organe de liaison (40) et/ou l'insert (39) comporte des moyens d'autofreinage.

6. Ensemble (25) selon l'une des revendications 1 à 4, **caractérisé en ce que** chaque moyen de fixation amont (37) comporte un organe d'appui (44) solidaire du bossage (29) et comportant un rebord d'appui (46) situé radialement à l'extérieur d'une zone de fixation (33, 34) du boîtier (22), l'organe élastique (48) étant un organe de compression monté radialement entre l'organe d'appui (44) et la zone de fixation du boîtier (22).

7. Ensemble (25) selon l'une des revendications 1 à 5, **caractérisé en ce que** les moyens de fixation amont (34) comportent au moins une entretoise d'usure (43) montée radialement entre une zone de fixation du boîtier (22) et un bossage (29).

8. Ensemble (25) selon l'une des revendications 1 à 7, **caractérisé en ce que** chaque zone de fixation amont (33) comporte un trou oblong (35) s'étendant circonférentiellement servant au passage d'un organe de liaison (40) qui relie la zone de fixation amont (33) à un bossage (29).

9. Ensemble (25) selon l'une des revendications 1 à 8, **caractérisé en ce que** la zone de fixation aval (34) comporte un trou oblong (36) s'étendant axialement servant au passage d'un organe de liaison (40) qui relie la zone de fixation aval (34) au carter (18).

10. Ensemble (25) selon l'une des revendications 1 à 9, **caractérisé en ce qu'**au moins certains desdits moyens de fixation (37, 38) comportant au moins un organe élastique (48) pour relier une zone de fixation du boîtier (22) à un bossage (29) ou au carter (18).

## Patentansprüche

1. Anordnung (25) für eine Turbine (7) eines Turbotriebwerks, umfassend ein Gehäuse (18) mit einer ringförmigen Wand (26), die sich um eine Achse (X) erstreckt, und Kühleinrichtungen zum Kühlen des Gehäuses (18), wobei die Kühleinrichtungen einen Sammelbehälter (22) und zumindest ein Rohr (23) umfassen, das sich in Umfangsrichtung um die ringförmige Wand (26) des Gehäuses (18) erstreckt und mit dem Behälter (22) verbunden ist, wobei das zumindest eine Rohr (23) Kühlluft-Ausstoßöffnungen aufweist,
**dadurch gekennzeichnet, dass** das Gehäuse (18) zumindest zwei Befestigungserhebungen (29) aufweist, die sich von der ringförmigen Wand (26) des Gehäuses (18) radial nach außen erstrecken, wobei die Erhebungen (29) in Umfangsrichtung voneinander beabstandet sind, wobei der Behälter (22) zumindest zwei stromaufwärtige Befestigungsbereiche (33), die jeweils über stromaufwärtige Befestigungsmittel (37) an einer Erhebung (29) befestigt sind, und zumindest einen stromabwärtigen Befestigungsbereich (34) aufweist, der über stromabwärtige Befestigungsmittel (38) an dem Gehäuse (18) befestigt ist, wobei zumindest einige der Befestigungsmittel (37, 38) eine relative Verlagerung in axialer Richtung und/oder in Umfangsrichtung zwischen dem Befestigungsbereich (33, 34) des Behälters (22) und der Erhebung (29) oder zwischen dem Befestigungsbereich (33, 34) des Behälters (22) und dem Gehäuse (18) ermöglichen, und dass jedes an einem stromaufwärtigen Befestigungsbereich (37) befestigte stromaufwärtige Befestigungsmittel (37) einen Einsatz (39) umfasst, der in einer Aufnahme (31) einer Erhebung (29) gelagert ist, wobei die stromaufwärtigen Befestigungsmittel (37) ein Verbindungselement (40) aufweisen, das einen stromaufwärtigen Befestigungsbereich (33) mit dem Einsatz (39) verbindet.

2. Anordnung (25) nach Anspruch 1,
**dadurch gekennzeichnet, dass** jede Erhebung (29) aus zumindest einem von der ringförmigen Wand (26) des Gehäuses (18) separat vorliegenden Teil gebildet und an dieser ringförmigen Wand (26) befestigt ist.

3. Anordnung (25) nach Anspruch 1 oder 2,
**dadurch gekennzeichnet, dass** der Einsatz (39) ein Außengewinde aufweist, das in ein in der Aufnahme (31) der Erhebung (29) ausgebildetes Innengewinde eingreift, wobei der Einsatz (39) gegenüber der Erhebung (29) drehfest festgelegt ist.

4. Anordnung (25) nach einem der Ansprüche 1 bis 3,
**dadurch gekennzeichnet, dass** das Verbindungselement (40) einen Befestigungsbereich (33, 34) mit einer Erhebung (29) verbindet, wobei es sich bei dem Verbindungselement (40) um eine Schraube handelt, die mit einem Innengewinde des Einsatzes (39) zusammenwirkt.

5. Anordnung (25) nach Anspruch 4,
**dadurch gekennzeichnet, dass** das Verbindungselement (40) und/oder der Einsatz (39) selbsthemmende Mittel aufweist.

6. Anordnung (25) nach einem der Ansprüche 1 bis 4,
**dadurch gekennzeichnet, dass** jedes stromaufwärtige Befestigungsmittel (37) ein Abstützelement (44) aufweist, das fest mit der Erhebung (29) verbunden ist und eine radial außerhalb eines Befestigungsbereichs (33, 34) des Behälters (22) angeordnete Abstützkante (46) aufweist, wobei das Federelement (48) ein Druckelement ist, das radial zwischen dem Abstützelement (44) und dem Befestigungsbereich des Behälters (22) gelagert ist.

7. Anordnung (25) nach einem der Ansprüche 1 bis 5,
**dadurch gekennzeichnet, dass** die stromaufwärtigen Befestigungsmittel (34) zumindest einen Verschleißabstandhalter (43) aufweisen, der radial zwischen einem Befestigungsbereich des Behälters (22) und einer Erhebung (29) gelagert ist.

8. Anordnung (25) nach einem der Ansprüche 1 bis 7,
**dadurch gekennzeichnet, dass** jeder stromaufwärtige Befestigungsbereich (33) ein sich in Umfangsrichtung erstreckendes Langloch (35) aufweist, das zum Durchführen eines Verbindungselements (40) dient, das den stromaufwärtigen Befestigungsbereich (33) mit einer Erhebung (29) verbindet.

9. Anordnung (25) nach einem der Ansprüche 1 bis 8,
**dadurch gekennzeichnet, dass** der stromabwärtige Befestigungsbereich (34) ein sich axial erstreckendes Langloch (36) aufweist, das zum Durchführen eines Verbindungselements (40) dient, das den stromabwärtigen Befestigungsbereich (34) mit dem Gehäuse (18) verbindet.

10. Anordnung (25) nach einem der Ansprüche 1 bis 9,
**dadurch gekennzeichnet, dass** zumindest einige der Befestigungsmittel (37, 38) zumindest ein Federelement (48) aufweisen, um einen Befestigungsbereich des Behälters (22) mit einer Erhebung (29) oder mit dem Gehäuse (18) zu verbinden.

## Claims

1. An assembly (25) for a turbomachine turbine (7) comprising a casing (18) including an annular wall (26) extending about an axis (X), and means of cooling the casing (18), the said means of cooling comprising a collector housing (22) and at least one tube (23) extending circumferentially around the annular wall (26) of the casing (18) and connected to the housing (22), the at least one tube (23) having cooling-air ejection orifices, **characterised in that** the casing (18) comprises at least two attachment bosses (29) extending radially outwardly from the annular wall (26) of the casing (18), said bosses (29) being circumferentially spaced from each other, the housing (22) comprising at least two upstream attachment areas (33) which are each attached to a boss (29) by upstream means of attachment (37) and at least one downstream attachment area (34) attached to the casing (18) by downstream means of attachment (38), at least some of the means of attachment (37, 38) allowing relative movement in the axial direction and/or in the circumferential direction between the attachment area (33, 34) of the housing (22) and the boss (29) or between the attachment area (33, 34) of the housing (22) and the casing (18) and **in that** each upstream means of attachment (37) attached to an upstream attachment area (33) comprises an insert (39) mounted in a recess (31) of a boss (29), the upstream means of attachment (37) comprising a connecting member (40) connecting the upstream attachment area (33) to the insert (39).

2. An assembly (25) according to claim 1, **characterised in that** each boss (29) is formed by at least one part separate from the annular wall (26) of the casing (18) and is attached to the said annular wall (26).

3. An assembly (25) according to claim 1 or 2, **characterised in that** the insert (39) comprises an external threading engaged in an internal tapping formed in the recess (31) of the boss (29), the insert (39) being prevented from rotating in relation to the boss (29).

4. An assembly (25) according to one of claims 1 to 3, **characterised in that** the connecting member (40) connects an upstream attachment area (33) to a boss (29), the connecting member (40) being a screw, cooperating with an internal tapping of the insert (39).

5. An assembly (25) according to claim 4, **characterised in that** the connecting member (40) and/or the insert (39) comprises means of self-locking.

6. An assembly (25) according to one of claims 1 to 4, **characterised in that** each upstream means of attachment (37) comprises a support member (44) integral with the boss (29) and comprising a support rim (46) situated radially outside an attachment area (33, 34) of the housing (22), the elastic member (48) being a compression member mounted radially between the support member (44) and the attachment area of the housing (22).

7. An assembly (25) according to one of claims 1 to 5, **characterised in that** the upstream means of attachment (37) comprises at least one wear spacer (43) mounted radially between an attachment area of the housing (22) and a boss (29).

8. An assembly (25) according to any of claims 1 to 7, **characterised in that** each upstream attachment area (33) has an oblong hole (35) extending circumferentially used for the passage of a connecting member (40) which connects the upstream attachment area (33) to a boss (29).

9. An assembly (25) according to any of claims 1 to 8, **characterised in that** the downstream attachment area (34) has an oblong hole (36) extending axially used for the passage of a connecting member (40) which connects the downstream attachment area (34) to a casing (18).

10. An assembly (25) according to one of claims 1 to 9, **characterized in that** at least some of the said means of attachment (37, 38) comprise at least one elastic member (48) for connecting an attachment area of the housing (22) to a boss (29) or to the casing (18).
